# EUROPÄISCHE PATENTSCHRIFT

(11) **EP 4 466 469 B1**
(45) Veröffentlichungstag und Bekanntmachung des Hinweises auf die Patenterteilung: **25.02.2026**
(21) Anmeldenummer: 23700257.1
(22) Anmeldetag: 02.01.2023
(51) Int. Cl.: F16D 55/226, F16D 65/00, F16D 65/095, F16D 65/097

(54) **SCHEIBENBREMSE UND SCHUTZBLECHANORDNUNG**
DISC BRAKE AND PROTECTION SHEET ARRANGEMENT
FREIN À DISQUE ET DISPOSITION DE LA TÔLE DE PROTECTION

(30) Priorität: 21.01.2022 DE 102022101381
(43) Veröffentlichungstag der Anmeldung: 27.11.2024
(73) Patentinhaber: BPW Bergische Achsen Kommanditgesellschaft, 51674 Wiehl (DE)
(72) Erfinder: SCHWARZ, Michael, 51469 Bergisch Gladbach (DE); NEUMANN, Arthur, 51597 Morsbach (DE); ABT, Christian, 51643 Gummersbach (DE); FIEDLER, Felix, 51674 Wiehl (DE); KLOSS, Jürgen, 51674 Wiehl (DE); SCHUMACHER, Torsten, 51588 Nümbrecht (DE); SEVERIN, Christian, 53819 Neunkirchen (DE); KLAAS, Thomas, 51580 Reichshof (DE)
(74) Vertreter: DREISS Patentanwälte PartG mbB
(86) Internationale Anmeldenummer: PCT/EP2023/050005
(87) Internationale Veröffentlichungsnummer: WO 2023/138909

(56) Entgegenhaltungen:
- DE-A1- 102018 005 036
- DE-A1- 102021 200 969
- US-A1- 2014 367 208

## Beschreibung

Die Erfindung betrifft eine Scheibenbremse mit den Merkmalen des Oberbegriffs des Anspruchs 1.

Die Erfindung betrifft ferner eine zur Verwendung in der Scheibenbremse geeignete Schutzblechanordnung mit den Merkmalen des Oberbegriffs des Anspruchs 11 und einen Bremsbelag mit einer daran fixierten Schutzblechanordnung nach Anspruch 18.

Bei der Reparatur und der Wartung von Kraftfahrzeugen oder Kraftfahrzeuganhängern müssen Bremsbeläge häufig unter schlechten Sichtverhältnissen eingebaut werden, etwa wegen engen Bauraums oder mangelhafter Beleuchtung. Da Bremsbeläge für die Sicherheit des Fahrzeuges besonders wichtige Bauteile sind, ist es sinnvoll, geeignete Vorsichtsmaßnahmen mit dem Ziel der Vermeidung von Fehlern bei deren Montage zu treffen.

Aus der EP 0 347 523 B1 ist ein Bremssattel bekannt bei welchem, um nur die vorgesehenen Bremsbeläge an den hierfür vorgesehenen Stellen einbauen zu können, an den Stützflächen des Bremsträgers, welche die Bremsbeläge während der axialen Zustellbewegung führen, zusätzliche Ansätze oder Ausnehmungen ausgebildet sind. Deren Konturen sind auf korrespondierende Ausnehmungen bzw. Ansätze an den Bremsbelägen abgestimmt. Die so erreichte Verschlüsselung wird fertigungstechnisch realisiert, indem bei der Bearbeitung der Stützflächen zugleich auch die Verschlüsselungsstrukturen entstehen. So wird erreicht, dass sich nur die jeweils vorgesehenen Bremsbeläge in den Bremsträger einsetzen lassen.

Jedoch wird nicht vermieden, dass ein richtiger Bremsbelag in falscher Einbaulage montiert wird. Mit der Fehlervermeidung beim Einbau von Bremsbelägen befassen sich auch die DE 29 19 535 A1 und die EP 0 752 541 A1. In der erstgenannten Druckschrift werden Bremsbelagpaare vorgeschlagen, deren Reibbeläge in Umfangsrichtung unterschiedlich lang sind. In der EP 0 752 541 A1 wird eine asymmetrische Gestaltung der Belagrückenplatten sowie der Stützflächen der beiden Bremsbeläge vorgeschlagen. Die asymmetrische Geometrie der Bremsbeläge und der Belagschächte des Bremsträgers kann dazu führen, dass die Bremse in den beiden möglichen Drehrichtungen ein unterschiedliches Betriebsverhalten zeigt.

Mit der Vermeidung einer Fehlmontage von Bremsbelägen in einer Schwimmsattel-Scheibenbremse befasst sich auch die DE 43 32 709 A1. An den Rückseiten der Belagrückenplatten sind axiale Vorsprünge nach Art von Noppen angeformt. Bei fehlerhafter Montage bewirken die Vorsprünge, dass sich die beiden Bremsbeläge nicht in einem ausreichenden gegenseitigen Abstand montieren lassen, dass dazwischen noch die Bremsscheibe passt. Werden hingegen die Bremsbeläge richtig montiert, ist der Abstand zwischen deren Reibflächen groß genug, um dazwischen die Bremsscheibe aufzunehmen. Es wird vermieden, den Schwimmsattel mit z.B. um 180° verdreht darin eingesetzten Bremsbelägen auf die Bremsscheibe aufzusetzen.

Aus der DE 10 2014 113 617 A1 ist eine Scheibenbremse mit Bremsbelägen bekannt, die in Belagschächte eines Bremsträgers eingesetzt sind und aus einem Reibbelag und einer Belagrückenplatte bestehen. Zwischen einem Seitenrand der Belagrückenplatte und einem Trägerhorn des Bremsträgers ist ein Federelement mit zwei federelastischen Enden angeordnet. Das erste Ende ist ausgelegt, den Bremsbelag gegenüber einem Fußbereich des Trägerhorns abzustützen. Das zweite Ende ist ausgelegt, den Bremsbelag gegenüber einem Kopfbereich des Trägerhorns abzustützen. Der Bremsbelag selbst ist asymmetrisch in Bezug auf seine Mitte in Umfangsrichtung gestaltet, so dass er sich nicht um 180° verdreht in den Belagschacht einsetzen ließe.

In der EP 1 974 150 B1 ist eine Scheibenbremse mit einem Bremsträger in Gestalt einer flachen Platte beschrieben. Der Bremsträger ist mit einem Belagschacht für den Bremsbelag versehen. Der Belagschacht ist mit in Bremszustellrichtung sich erstreckenden Führungsflächen versehen, allerdings erfolgt das tatsächliche Führen des Bremsbelags mittels zusätzlicher Verschleißbleche, die in den Belagschacht zwischen Bremsbelag und Belagschacht eingesetzt sind. An jedem Verschleißblech befindet sich eine radiale und eine tangentiale Führungsfläche für den Bremsbelag. Zur Fixierung an dem Bremsträger sind die Verschleißbleche mit Laschen versehen, wobei sich erste Laschen über die Innenseite, und zweite Laschen über die Außenseite des Bremsträgers erstrecken.

Aus der DE 10 2021 200 969 A1 und der DE 10 2018 005 036 A1 ist jeweils Scheibenbremse bekannt, bei der zwischen einem Bremsbelag und einem Bremsträger Federbleche vorgesehen sind. Zur Montage werden zunächst die Federbleche am Bremsträger angeordnet und daran anschließend werden die Bremsbeläge axial, also parallel zur Drehachse der Bremsscheibe, in die Federbleche eingesetzt.

Aus der US 2014/0367208 A1 ist es bekannt, am Bremsbelag angeordnete Rückstellfederbleche vorzusehen.

Der Erfindung liegt die Aufgabe zugrunde, eine Scheibenbremse zu entwickeln, bei der im Zuge des Einsetzens eines Bremsbelags sowohl erkennbar ist, ob dieser für die Scheibenbremse bestimmt ist als auch, ob dieser in richtiger Einbaulage montiert wird.

Zur Lösung wird erstens eine Scheibenbremse mit den Merkmalen des Patentanspruchs 1 vorgeschlagen. Diese besteht unter anderem aus einem an einer Fahrzeugachse montierbaren Bremsträger und einem Bremssattel, der an der Innen- bzw. an der Außenseite einer Bremsscheibe angeordnete Bremsbeläge überbrückt. Die Bremsbeläge bestehen aus einem der Bremsscheibe zugewandten Reibbelag und einer Belagrückenplatte, wobei ein in dem Bremssattel geführtes Druckorgan gegen die Belagrückenplatte des inneren Bremsbelags zustellbar ist.

Der Bremsträger weist zur Aufnahme des inneren Bremsbelags einen Belagschacht auf mit zwei einander zugewandten ersten Stützflächen zur Abstützung des Bremsbelags in Umfangsrichtung und zweiten Stützflächen zur Abstützung des Bremsbelags nach radial innen. Der Bremsträger ist zumindest um den Belagschacht herum flach mit einer Innenseite und einer parallelen Außenseite ausgebildet.

Zwischen dem Bremsbelag und jeder ersten Stützfläche ist jeweils ein Blech angeordnet, an dem zu seiner Fixierung in Zustellrichtung Laschen ausgebildet sind, von denen eine innere Lasche gegen die Innenseite des Bremsträgers und eine äußere Lasche gegen die Außenseite des Bremsträgers abgestützt ist. Die Bleche sind auf diese Weise in Zustellrichtung bzw. entgegen der Zustellrichtung am Bremsträger verriegelt.

Die Bleche sind mittels Halteelementen an der Belagrückenplatte fixiert, wobei in Zustellrichtung die Fixierkraft der Halteelemente geringer ist, als die Fixierkraft der gegen die Innenseite des Bremsträgers abgestützten Laschen.

Mindestens eines der Bleche ist mit einem einzelnen Montageindikator versehen, der sich in montiertem Zustand in einer Ebene E befindet, die zwischen jenen beiden Ebenen angeordnet ist, in denen sich die Innenseite und die Außenseite des Bremsträgers befinden. In Zustellrichtung ist der Abstand der Ebene E zu der Ebene der Innenseite einerseits und zu der Ebene der Außenseite andererseits unterschiedlich groß.

Daher befindet sich die Ebene E, in der bei richtig montiertem Bremsbelag der - natürlich nur einmal vorhandene - Montageindikator angeordnet ist, nicht in der Mitte zwischen Innen- und Außenseite des Bremsträgers, sondern außerhalb dieser Mitte. Zudem ist in derselben Ebene E der Bremsträger mit einer - ebenfalls nur einmal vorhandenen - Struktur versehen, in die der Montageindikator eingreift, oder die umgekehrt in den Montageindikator eingreift.

Der Grundgedanke dieser Lösung ist, dass der Montageindikator an dem Blech nur dann mit der Struktur an dem Bremsträger in Eingriff steht, wenn der Reibbelag, und nicht wenn die Belagrückenplatte der Bremsscheibe zugewandt ist. Daher ist bereits bei dem Versuch des Einsetzens des Bremsbelags in den Belagschacht des Bremsträgers erkennbar, ob die Montage in richtiger Einbaulage erfolgt.

Bei einer falschen und insbesondere bei einer um 180° verdrehten Einbaulage korrespondieren die Positionen des Montageindikators an dem Blech und der korrespondierenden Struktur an dem Bremsträger nicht. Der Bremsbelag mit dem daran fixierten Blech lässt sich dann nicht vollständig in den Belagschacht absenken mit der Folge, dass anschließend ein Bügel, welcher über den Belagschacht führt, nicht verschlossen werden kann. Für den Monteur ist damit eindeutig, dass der Bremsbelag nicht in der vorgesehenen, also richtigen Einbaulage in den Belagschacht eingesetzt wurde. Ebenfalls erkennbar ist, ob es sich um einen für die Bremse bestimmten Bremsbelag handelt. Ist dies nicht der Fall, lässt sich der Bremsbelag ebenfalls nicht in den Belagschacht einsetzen.

Vorteilhafte Ausgestaltungen der Scheibenbremse sind in den Unteransprüchen angegeben.

Vorgeschlagen wird insbesondere, dass die Bleche Winkelbleche sind, deren Grundkörper sich aus einem Radialschenkel und einem Tangentialschenkel zusammensetzt. Hierbei sind die Begriffe "radial" und "tangential" in Bezug auf die Drehachse zu verstehen, um die die Bremsscheibe der Scheibenbremse rotiert. Die Winkelbleche liegen mit der Außenseite ihres Radialschenkels an der ersten Stützfläche an, und mit ihrem Tangentialschenkel an der zweiten Stützfläche.

Der Montageindikator befindet sich auf der Außenseite des Radialschenkels, also auf jener Seite, mit der der Radialschenkel an der ersten Stützfläche des Belagschachts anliegt.

Vorzugsweise sind an dem Tangentialschenkel weitere Laschen ausgebildet, von denen eine innere Lasche gegen die Innenseite und eine äußere Lasche gegen die Außenseite des Bremsträgers abgestützt ist.

Vorzugsweise sind die Flächen, an denen die Bleche mit den ersten und zweiten Stützflächen des Belagschachts in Kontakt stehen, symmetrisch in Bezug auf die Mitte des Belagschachts in Umfangsrichtung angeordnet. Vorteilhaft an dieser Symmetrie ist, dass die so ausgebildete Scheibenbremse in beiden möglichen Drehrichtungen gleichermaßen arbeitet, d. h. mit derselben Bremscharakteristik.

Mit dem Ziel einer preisgünstigen Herstellbarkeit wird vorgeschlagen, dass die Bleche einschließlich der Laschen und des Montageindikators einstückige Stanz- und Biegeteile sind.

Vorzugsweise bestehen sind die an dem Radialschenkel ausgebildeten inneren und äußeren Laschen jeweils aus einem mit dem Radialschenkel verbundenen Basisabschnitt und einem sich von dem Basisabschnitt weg erstreckenden Klemmabschnitt, wobei die Abstände der Klemmabschnitte der Laschen zueinander geringer sind, als die Abstände der Basisabschnitte der Laschen zueinander. In diesem Fall ist es sinnvoll, wenn sich die Klemmabschnitte in Längsrichtung des jeweiligen Radialschenkels von den Basisabschnitten weg erstrecken.

Vorzugsweise ist der Montageindikator an einem dem Tangentialschenkel abgewandten Rand des Radialschenkels angeformt. In diesem Fall ist der Montageindikator vorzugsweise über einen 180°-Bogen mit dem Rand verbunden, und erstreckt sich im Übrigen parallel zu dem Radialschenkel.

Vorzugsweise ist die Struktur, mit der der Bremsträger versehen ist, eine Ausnehmung, in die der Montageindikator durch Eintauchen eingreift. Die Ausnehmung ist z. B. ein Sackloch, welches den zweiten Stützflächen abgewandt offen ist.

Die Halteelemente können z. B. an den Blechen angeformte Arme sein, wobei diese Arme in Ausnehmungen an der Rückseite der Belagrückenplatte durch Eintauchen eingreifen.

Die Ausnehmungen können Sacklöcher sein, wobei diese Sacklöcher dem Reibbelag abgewandt offen sind. Herstellungstechnisch ist von Vorteil, wenn die Halteelemente mittels Dübeln in den Ausnehmungen fixiert sind. Ferner wird vorgeschlagen, dass die Belagrückenplatte an ihrer Rückseite zur Gewichtsreduzierung Streben aufweist, die sich von einem strebenfreien Zentralbereich bis zu einem rahmenförmigen Verstärkungsrand erstrecken, und dass sich die Ausnehmungen in dem rahmenförmigen Verstärkungsrand befinden.

Zur Lösung der oben genannten Aufgabenstellung wird außerdem eine Schutzblechanordnung mit Patentanspruch 11 sowie mit Anspruch ein Bremsbelag mit einer daran fixierten Schutzblechanordnung nach Anspruch 18 vorgeschlagen.

Weitere Vorteile und Einzelheiten werden nachfolgend anhand eines Ausführungsbeispiels erläutert, welches auf den Zeichnungen wiedergegeben ist. Darin zeigen:
Abb. 1: in perspektivischer Gesamtdarstellung eine Scheibenbremse für ein Fahrzeug;
Abb. 2: in perspektivischer Darstellung den Bremsträger der Scheibenbremse mit einem

in dem Belagschacht des Bremsträgers montierten Bremsbelag, wobei der Bremsbelag mit einer Schutzblechanordnung aus zwei vorläufig an dem Bremsbelag fixierten Winkelblechen versehen ist;
Abb. 3: den Bremsbelag von seiner Rückseite her mit den daran fixierten Winkelblechen der Schutzblechanordnung;
Abb. 4: den Bremsbelag von seiner Rückseite her mit den hier getrennt dargestellten Winkelblechen, d. h. vor deren Fixierung an dem Bremsbelag.

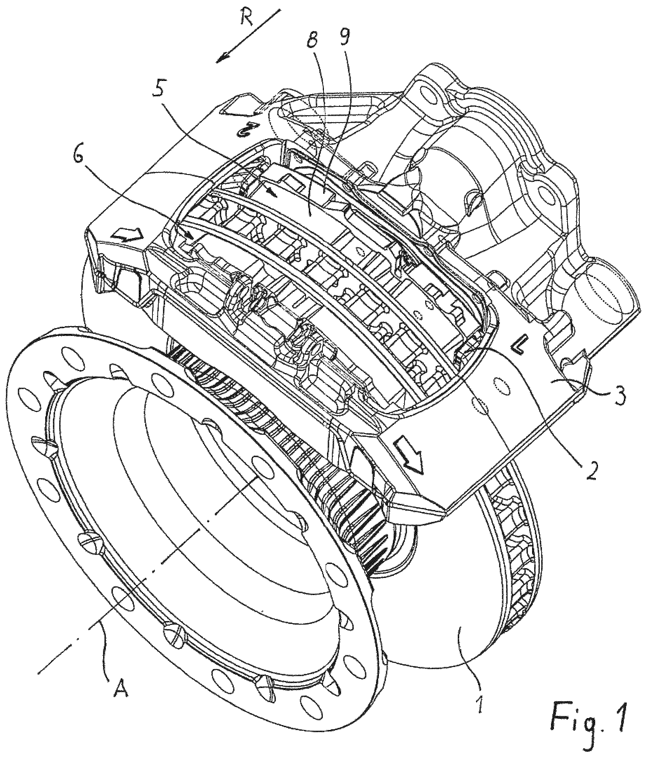

Die in Abb. 1 dargestellte Scheibenbremse ist vom Schwimmsattel-Typ und z. B. eine druckluftbetätigte Nutzfahrzeug-Scheibenbremse. Der durch den Verschleiß zweier Bremsbeläge 5, 6 sowie der Bremsscheibe 1 bedingte Ausgleich wird durch eine in den Bremssattel der Scheibenbremse integrierte Nachstelleinrichtung erreicht. Bestandteile der Scheibenbremse sind ein starrer Bremsträger 2, welcher achsfest montiert ist, und der an dem Bremsträger 2 längsbeweglich, d. h. schwimmend gelagerte Bremssattel 3.

An oder in dem Bremssattel 3 befindet sich eine Zuspanneinrichtung. Diese beinhaltet den mechanisch, hydraulisch oder vorzugsweise pneumatisch angetriebenen Mechanismus zur Erzeugung der Bremszuspannkraft sowie Zustellelemente, um eine Zustellkraft auf die beiden Bremsbeläge 5, 6 der Scheibenbremse auszuüben. Vorzugsweise wird durch ein in dem Bremssattel geführtes Druckorgan eine Zustellbewegung in Zustellrichtung R nur auf den aktionsseitigen, inneren Bremsbelag 5 ausgeübt, wohingegen der reaktionsseitige, äußere Bremsbelag 6 in Zustellrichtung R fest in dem schwimmend gelagerten Bremssattel 3 sitzt.

Die beiden jeweils in Belagschächten der Scheibenbremse angeordneten Bremsbeläge 5, 6 setzen sich in üblicher Weise zusammen aus einem gegen die auf der Drehachse A drehende Bremsscheibe 1 arbeitenden Reibbelag 8, und aus einer rückseitigen Belagrückenplatte 9. Die Belagrückenplatte 9 ist von größeren Abmessungen als der Reibbelag 8, steht also vorzugsweise allseits über den Reibbelag 8 über. Stützkräfte beim Bremsen werden also über seitliche Ränder 9A der Belagrückenplatte 9 in den umgebenden Belagschacht abgeführt, und nicht über den Reibbelag 8.

Die die Bremskräfte auf den Belagschacht abführenden Abstützflächen an den Belagrückenplatten 9 sind vorzugsweise symmetrisch zur Mitte der Bremsbeläge in Umfangsrichtung gestaltet, so dass die Bremse in beiden denkbaren Drehrichtungen dieselbe Bremscharakteristik zeigt.

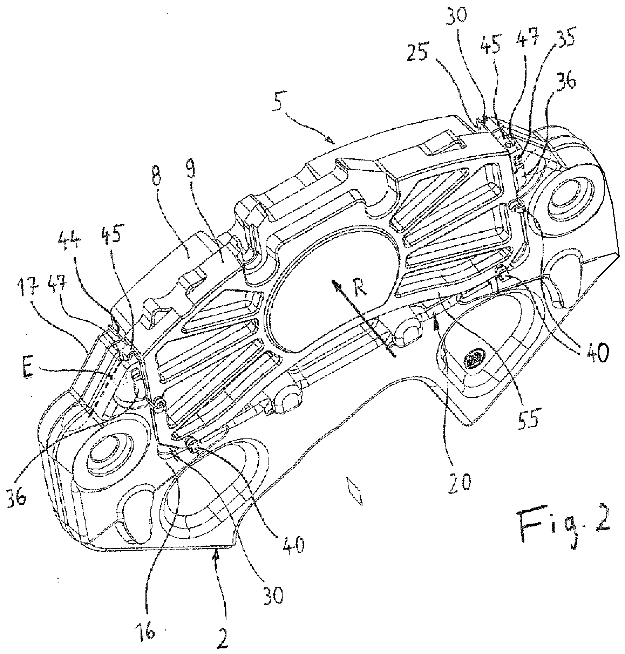

Gemäß Abb. 2 befindet sich der Belagschacht 20 für den unmittelbar zugestellten, inneren Bremsbelag 5 in dem Bremsträger 2. Der Belagschacht 20 dient der Aufnahme, Abstützung und Führung des inneren Bremsbelags 5. Dieser Belagschacht 20 befindet sich auf der nach fahrzeuginnen gerichteten Seite der Bremsscheibe 1.

Der reaktionsseitige äußere Bremsbelag 6 befindet sich hingegen in einem eigenen Belagschacht auf der Außenseite der Bremsscheibe 1. Der Belagschacht für den Bremsbelag 6 befindet sich beim Ausführungsbeispiel unmittelbar in dem Bremssattel 3, der hierzu mit entsprechenden Abstützflächen für den äußeren Bremsbelag 6 versehen ist.

Der Belagschacht 20 für den inneren Bremsbelag 5 ist, in Blickrichtung zur Bremsscheibe hin und damit in Bremszustellrichtung R betrachtet, eine Ausnehmung in dem starren Bremsträger 2. Die Ausnehmung ist der Drehachse A (Abb. 1) abgewandt offen und im Übrigen von in etwa rechteckiger Kontur, weshalb auch der darin einsetzbare Bremsbelag 5 eine im Wesentlichen rechteckige Gestalt aufweist, wobei diese Gestalt jedoch entlang ihres Außenrandes und teilweise auch entlang ihres Innenrandes bogenförmige Rundungen entsprechend der Kreisform der Bremsscheibe 1 aufweist.

Die Kontur bzw. Wandung des Belagschachts 20 umfasst erste Stützflächen zur Abstützung des Bremsbelags 5 in Umfangsrichtung und zweite Stützflächen zur Abstützung des Bremsbelags 5 nach radial innen, d. h. zu der Drehachse A hin. Die beiden ersten Stützflächen sind einander zugewandt. Die beiden zweiten Stützflächen sind fluchtend zueinander angeordnet. Alle ersten und zweiten Stützflächen erstrecken sich über eine gewisse Breite in Zustellrichtung R, d. h. in Richtung der Bewegung des Bremsbelags 5 bei dessen Zustellung.

Der Bremsträger 2 ist insgesamt, zumindest aber um den Belagschacht 20 herum, flach ausgebildet mit einer nach fahrzeuginnen gerichteten und der Bremsscheibe abgewandten Innenseite 16, und einer zu der Innenseite 16 parallelen, nach fahrzeugaußen gerichteten und der Bremsscheibe zugewandten Außenseite 17.

Zwischen dem Bremsbelag 5 und den ersten und zweiten Stützflächen des Belagschachts 20 sind zwei Bleche 30 angeordnet, die gemeinsam eine Schutzblechanordnung bilden. Die Flächen, an denen die Bleche 30 mit den ersten und zweiten Stützflächen des Belagschachts in Kontakt stehen, sind symmetrisch in Bezug auf die Mitte des Belagschachts 20 in Umfangsrichtung angeordnet, so dass die Scheibenbremse in beiden denkbaren Drehrichtungen das gleiche Bremsverhalten zeigt.

Die beiden Bleche 30 der Schutzblechanordnung sind beim Ausführungsbeispiel Winkelbleche. Den Grundkörper des Winkelblechs bilden ein Radialschenkel 31 mit Abstützung gegen die erste Stützfläche des Belagschachts 20 und ein Tangentialschenkel 32 mit Abstützung gegen die zweite Stützfläche des Belagschachts 20.

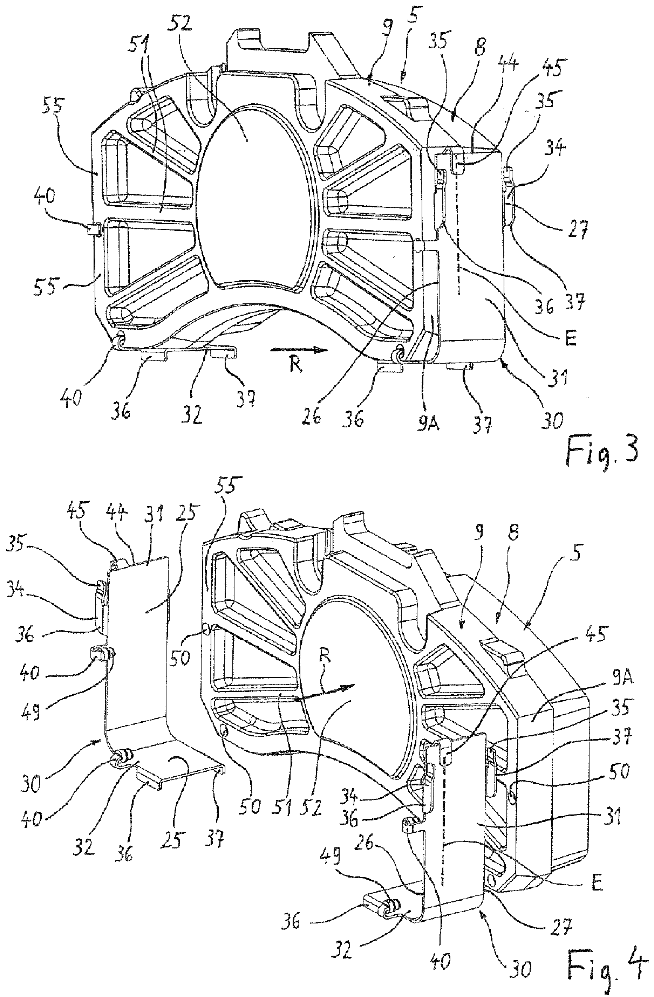

Abb. 4 zeigt, dass die Radialschenkel 31 und Tangentialschenkel 32 an ihren Innenseiten jeweils Anlageflächen 25 besitzen. Die Anlageflächen 25 dienen der Abstützung des Bremsbelags 5 gegenüber den beim Bremsen auftretenden Bremsreaktionskräften, sowie der Führung des Bremsbelags in Zustellrichtung R. Für eine ausreichend lange Führung in Zustellrichtung R, wobei die Zustellrichtung R parallel zu der Drehachse A ist, erstrecken sich die Anlageflächen 25 der Radialschenkel 31 und Tangentialschenkel 32 jeweils von einem Innenrand 26 bis zu einem Außenrand 27.

An den Blechen bzw. Winkelblechen 30 sind zu ihrer Fixierung in Zustellrichtung R paarweise Laschen 36, 37 ausgebildet. Eine innere Lasche 36 ist an dem Innenrand 26 angeformt. Sie ist gegen die Innenseite 16 des Bremsträgers 2 abgestützt. Eine äußere Lasche 37 ist an dem Außenrand 27 angeformt. Sie ist gegen die Außenseite 17 des Bremsträgers 2 abgestützt.

Die inneren und äußeren Laschen 36, 37 sind an dem Blech 30 vorzugsweise symmetrisch zueinander angeordnet und gestaltet. Eine innere Lasche 36 und eine äußere Lasche 37 befinden sich sowohl an dem Radialschenkel 31, als auch an dem Tangentialschenkel 32.

Die an dem Radialschenkel 31 ausgebildeten inneren und äußeren Laschen 36, 37 bestehen jeweils aus einem mit dem Radialschenkel 31 rechtwinklig verbundenen Basisabschnitt 34 und einem sich von dem Basisabschnitt 34 weg erstreckenden Klemmabschnitt 35. Die Abstände der Klemmabschnitte 35 zueinander sind geringer, als die Abstände der Basisabschnitte 34 zueinander. Die Abstände der Klemmabschnitte 35 zueinander sind insbesondere geringer oder höchstens gleich der Dicke des Bremsträgers 2 zwischen seiner Innenseite 16 und seiner Außenseite 17. Für ein federelastisches Klemmverhalten erstrecken sich die Klemmabschnitte 35 in Richtung der Hauptlängserstreckung des jeweiligen Radialschenkel 31 von den Basisabschnitten 34 weg.

Bei der Montage des Bremsbelags 5, d.h. während dessen Einsetzen in den Belagschacht 20, sind die Winkelbleche 30 bereits an der Belagrückenplatte 9 des Bremsbelags 5 fixiert. Diese Fixierung ist vorläufiger Art und erfolgt mit Halteelementen 40, die an den Blechen 30 ausgebildet sind und in der Belagrückenplatte 9 verankert sind. Beim Ausführungsbeispiel ist jedes der zwei Winkelbleche 30 mit zwei Halteelementen 40 in der Belagrückenplatte 9 verankert, von denen ein Halteelemente 40 an dem Radialschenkel 31 und das andere Halteelement 40 an dem Tangentialschenkel 32 des Blechs ausgebildet ist.

Das Einsetzen des Bremsbelags 5 in den Belagschacht 20 erfolgt von oben her, d. h. mit Montagerichtung parallel zu der als Reibfläche ausgebildeten Innenseite der Bremsscheibe 1. Beim Einsetzen des Bremsbelags 5 mit den daran fixierten Blechen 30 in den Belagschacht 20 gelangen die Laschen 36 zur Anlage an der Innenseite 16, und die anderen Laschen 37 zur Anlage an der Außenseite 17 des Bremsträgers 2. Auf diese Weise wird erreicht, dass die Bleche 30 in Zustellrichtung R und entgegen der Zustellrichtung R an dem Bremsträger 2 fixiert sind, und damit auch der Bremsbelag 5 in dem Belagschacht 20 in Zustellrichtung und entgegen der Zustellrichtung fixiert ist.

Diese Fixierung allerdings ist nur von vorläufiger Art. Denn die gegen die Innenseite 16 des Bremsträgers 2 abgestützten Laschen 36 einerseits und die Halteelemente 40 andererseits sind derart unterschiedlich ausgebildet und dimensioniert, dass in Zustellrichtung R die Fixierkraft der Laschen 36 größer ist, als die Fixierkraft der Halteelemente 40. Wird daher in Zustellrichtung R erstmals ein erhöhter Bremsdruck gegen die Belagrückenplatte 9 ausgeübt, geben ausschließlich die Halteelemente 40 aufgrund ihrer geringeren Fixierkraft nach, indem sie sich aus oder von der Belagrückenplatte 9 lösen. Hingegen behalten die im Vergleich stabiler ausgebildeten Laschen 36 dauerhaft und auch während des gesamten späteren Bremsbetriebs ihre Funktion der Fixierung der Bleche 30 in Zustellrichtung R bei.

Gleiches gilt für die anderen Laschen 37, die während des gesamten späteren Bremsbetriebs die Funktion der Fixierung der Bleche 30 am Bremsträger in Gegenrichtung sicherstellen, also entgegen der Zustellrichtung R.

Mindestens eines der Winkelbleche 30, vorzugsweise aber beide, sind mit einem einzelnen Montageindikator 45 versehen. Dieser ist einstückig an einem dem Tangentialschenkel 32 abgewandten Rand 44 des Winkelblechs 30 ausgebildet. Der Montageindikator 45 befindet sich in montiertem Zustand in einer Ebene E, die zwischen jenen zwei zueinander parallelen Ebenen angeordnet ist, in denen sich die Innenseite 16 und die Außenseite 17 des Bremsträgers 2 befinden.

Entscheidend ist, dass in Bremszustellrichtung R der Abstand der Ebene E zu der Ebene der Innenseite 16 einerseits und zu der Ebene der Außenseite 17 andererseits unterschiedlich groß ist. Daher befindet sich die Ebene E, in der bei richtig montiertem Bremsbelag 5 der - natürlich nur einmal vorhandene - Montageindikator 45 angeordnet ist, nicht in der Mitte zwischen der Innenseite 16 und der Außenseite 17, sondern außerhalb dieser Mitte. Außerdem ist derselben Ebene E, und auch nur in dieser, der Bremsträger mit einer - ebenfalls nur einmal vorhandenen - Struktur 47 versehen (Abb. 2), in die der Montageindikator 45 durch Eintauchen eingreift.

Beim Ausführungsbeispiel ist der Montageindikator 45 an einem dem Tangentialschenkel 32 abgewandten Rand 44 des Radialschenkels 31 angeordnet und befestigt.

Ebenso ist, wie Abb. 4 zeigt, in Bremszustellrichtung R der Abstand der Ebene E, in der sich der Montageindikator 45 befindet, zu der Ebene des Innenrandes 26 des Winkelblechs 30 einerseits und zu der Ebene des Außenrandes 27 des Winkelblechs 30 andererseits unterschiedlich groß. Der Montageindikator 45 ist daher auch in Bezug auf die Ebenen, in denen sich die Innenränder 26 und Außenränder 27 der Bleche befinden, nicht mittig angeordnet.

Die Struktur 47 ist von solcher Größe, dass der Montageindikator 45 gerade so eben darin hineinpasst bzw. umgekehrt die Struktur 47 gerade so eben in den Montageindikator hineinpasst.

Für eine preiswerte Herstellbarkeit sind die beiden Winkelbleche 30 einschließlich der Laschen 36, 37, der Halteelemente 40 und des Montageindikators 45 einstückige Stanz- und Biegeteile aus
Metall, wobei nicht nur die Laschen 36, 37, sondern ebenso der Montageindikator 45 und vorzugsweise auch die Halteelemente 40 in einem Biegeprozess hergestellte Laschen sind.

Der Montageindikator 45 befindet sich auf der Außenseite des Radialschenkels 31. Er befindet sich also auf jener der Anlagefläche 25 abgewandten Seite des Radialschenkels 31, die in montiertem Zustand der ersten Stützfläche des Belagschachts 20 gegenüberliegt.

Der Montageindikator 45 ist beim Ausführungsbeispiel als Lasche oder Arm gestaltet. Damit das freie Ende des Arms, welches sich in Haupterstreckungsrichtung des Radialschenkels 31 erstreckt, in die Struktur 47 eintauchen kann, ist dieses Ende über einen 180°-Bogen mit dem Rand 44 verbunden.

Die den Montageindikator 45 aufnehmende Struktur 47 des Bremsträgers 2 ist eine Ausnehmung 47 im Bremsträger
2. Die Ausnehmung 47 befindet sich außerhalb des Belagschachts 20. Sie befindet sich insbesondere an der den zweiten Stützflächen des Belagschachts 20 abgewandten Oberseite des Bremsträgers 2.

Vorzugsweise ist die Ausnehmung 47 ein Sackloch, welches den zweiten Stützflächen abgewandt offen ist. Die Weite der Ausnehmung 47 ist derart, dass der Montageindikator 45 berührungsfrei in die Ausnehmung 47 eintaucht.

Die Halteelemente 40 sind an den Winkelblechen 30 angeformte Laschen bzw. Arme, die in Ausnehmungen 50 an der Rückseite der Belagrückenplatte 9 durch Eintauchen eingreifen. Vorzugsweise ist jedes Halteelemente 40 mittels eines Dübels 49 in der jeweiligen Ausnehmung 50 fixiert, wobei der Dübel 49 an der Lasche bzw. an dem Arm befestigt ist. Der Dübel 49 besteht vorzugsweise aus Kunststoff.

Die Ausnehmungen 50 sind Sacklöcher, welche dem Reibbelag 8 abgewandt offen sind, so dass die Dübel 49 darin unter Reibschluss Platz finden.

Die Rückseite der Belagrückenplatte 9 weist zur Gewichtsreduzierung Streben 51 auf, die sich von einem strebenfreien Zentralbereich 52 der Belagrückenplatte 9, gegen den bei der Zustellung das Druckorgan der Bremse arbeitet, strahlenförmig bis zu einem rahmenförmigen Verstärkungsrand 55 erstrecken. Die Ausnehmungen 50 befinden sich platzsparend in dem Verstärkungsrand 55.

Entscheidend bei der beschriebenen Lösung ist, dass in Zustellrichtung R der Abstand der Ebene E des Montageindikators 45 zu der Ebene der Innenseite 16 einerseits und zu der Ebene der Außenseite 17 andererseits unterschiedlich groß ist. Dadurch steht der Montageindikator 45 mit der Struktur 47 an dem Bremsträger 2 nur dann in Eingriff, wenn der Reibbelag 8, und nicht wenn die Belagrückenplatte 9 der Bremsscheibe zugewandt ist. Bereits bei dem Versuch des Einsetzens des mit den Winkelblechen 30 bestückten Bremsbelags 5 in den Belagschacht 20 erkennbar, ob die Montage in richtiger Einbaulage erfolgt.

Bei einer falschen und insbesondere bei einer um 180° verdrehten Einbaulage korrespondieren die Positionen des Montageindikators 45 und der korrespondierenden Struktur 47 an dem Bremsträger 2 nicht, da sich dann der Montageindikator 45 einerseits und die Struktur 47 an dem Bremsträger andererseits in unterschiedlichen Ebenen befinden. Der mit den Blechen 30 bestückte Bremsbelag 5 lässt sich dann nicht vollständig in den Belagschacht 20 absenken. Dies wiederum hat zur Folge, dass anschließend ein Bügel, welcher sich in Querrichtung über den Belagschacht 20 erstreckt, nicht wie vorgesehen verschlossen werden kann. Spätestens damit ist eindeutig, dass der Bremsbelag 5 nicht in der vorgesehenen Einbaulage in den Belagschacht eingesetzt wurde.

Bei einer zweiten, auf der Zeichnung nicht dargestellten Ausführungsform der Erfindung ist der Montageindikator eine quer zur Zustellrichtung R ausgebildete Delle in dem Radialschenkel 31 des Winkelblechs 30. Die Delle taucht in eine in die Zustellrichtung R sich erstreckende, gleichermaßen außermittige Nut ein. Die Nut befindet sich an jenem in Radialrichtung sich erstreckenden Rand 9A der Belagrückenplatte 9 (Abb. 4), mit dem sich die Belagrückenplatte 9 bei der Abführung der Bremskräfte an dem Radialschenkel 31 abstützt.

Beim Ausführungsbeispiel umfasst die Schutzblechanordnung zwei getrennte Winkelbleche 30, also zwei getrennte Grundkörper. Ebenso ist es möglich, nur ein einziges Blech vorzusehen, welches die Gestaltungen der zwei Winkelbleche 30 in sich vereint und dessen dann einteiliger Grundkörper beide Radialschenkel 31 und beide Tangentialschenkel 32 umfasst.

Bei einer weiteren, auf der Zeichnung nicht dargestellten Ausführungsform der Erfindung dient als das Halteelement 40 ein sich quer zu der Zustellrichtung R erstreckender Stift oder eine kurze Schraube. Der Stift oder die Schraube kann aus Kunststoff bestehen und ist bis zum Einsetzen des Bremsbelags in die Montageposition noch unversehrt, hält also das jeweilige Blech 30 an der Belagrückenplatte 9. Erst beim Einsetzen der Einheit aus Bremsbelag 5 und Blechen 30 in den Belagschacht 20 schert der Stift bzw. die Schraube an einer Kante des Belagschachts ab.

### Bezugszeichenliste

- 1: Bremsscheibe
- 2: Bremsträger
- 3: Bremssattel
- 5: Bremsbelag innen
- 6: Bremsbelag außen
- 8: Reibbelag
- 9: Belagrückenplatte
- 9A: Rand der Belagrückenplatte
- 16: Innenseite
- 17: Außenseite
- 20: Belagschacht
- 25: Anlagefläche
- 26: Innenrand
- 27: Außenrand
- 30: Blech, Winkelblech
- 31: Radialschenkel
- 32: Tangentialschenkel
- 34: Basisabschnitt
- 35: Klemmabschnitt
- 36: Lasche
- 37: Lasche
- 40: Halteelement
- 44: Rand
- 45: Montageindikator
- 47: Struktur, Ausnehmung
- 49: Dübel
- 50: Ausnehmung
- 51: Strebe
- 52: Zentralbereich
- 55: Verstärkungsrand
- A: Drehachse der Bremsscheibe
- E: Ebene
- R: Zustellrichtung, Bremszustellrichtung

## Patentansprüche

1. Scheibenbremse mit einem an einer Fahrzeugachse montierbaren Bremsträger (2) und einem Bremssattel (3), der an der Innen- bzw. an der Außenseite einer Bremsscheibe (1) angeordnete Bremsbeläge (5, 6) überbrückt,
wobei sich die Bremsbeläge (5, 6) aus einem der Bremsscheibe (1) zugewandten Reibbelag (8) und einer Belagrückenplatte (9) bestehen, und ein in dem Bremssattel (3) geführtes Druckorgan gegen die Belagrückenplatte (9) des inneren Bremsbelags (5) zustellbar ist,
wobei der Bremsträger (2) zur Aufnahme des inneren Bremsbelags (5) einen Belagschacht (20) aufweist mit zwei einander zugewandten ersten Stützflächen zur Abstützung des Bremsbelags (5) in Umfangsrichtung und zweiten Stützflächen zur Abstützung des Bremsbelags (5) nach radial innen, und
wobei der Bremsträger (2) zumindest um den Belagschacht (20) herum flach mit einer Innenseite (16) und einer parallelen Außenseite (17) ausgebildet ist,
wobei zwischen dem Bremsbelag (5) und jeder ersten Stützfläche jeweils ein Blech (30) angeordnet ist, an dem zu seiner Fixierung in Zustellrichtung (R) Laschen (36, 37) ausgebildet sind, von denen eine innere Lasche (36) gegen die Innenseite (16) und eine äußere Lasche (37) gegen die Außenseite (17) abgestützt ist,
wobei mindestens eines der Bleche (30) mit einem Montageindikator (45) versehen ist, der sich in einer Ebene (E) zwischen der Innenseite (16) und der Außenseite (17) befindet, wobei in Zustellrichtung (R) der Abstand der Ebene (E) zu der Innenseite (16) einerseits und zu der Außenseite (17) andererseits unterschiedlich groß ist, und
wobei der Bremsträger (2) in derselben Ebene (E) mit einer Struktur (47) versehen ist, in die der Montageindikator (45) eingreift, oder die in den Montageindikator (45) eingreift,
**dadurch gekennzeichnet,**
**dass** das Einsetzen des Bremsbelags (5) in den Belagschacht (20) von oben, also mit Montagerichtung parallel zu der als Reibfläche ausgebildeten Innenseite (16) der Bremsscheibe (1), erfolgt,
**dass** die Bleche (30) mittels Halteelementen (40) an der Belagrückenplatte (9) fixiert sind, so dass beim Einsetzen des Bremsbelags (5) mit den daran fixierten Blechen (30) in den Belagschacht (20) die Laschen (36) zur Anlage an der Innenseite (16), und die anderen Laschen (37) zur Anlage an der Außenseite (17) des Bremsträgers (2) gelangen, und dass in Zustellrichtung (R) die Fixierkraft der Halteelemente (40) geringer ist, als die Fixierkraft der gegen die Innenseite (16) abgestützten Laschen (36).

2. Scheibenbremse nach Anspruch 1, **dadurch gekennzeichnet, dass** die Bleche (30) Winkelbleche sind, die jeweils mit einem Radialschenkel (31) an der ersten, und
mit einem Tangentialschenkel (32) an der zweiten Stützfläche des Belagschachts (20) anliegen.

3. Scheibenbremse nach Anspruch 2, **dadurch gekennzeichnet, dass** an dem Tangentialschenkel (32) weitere Laschen (36, 37) ausgebildet sind, von denen eine innere Lasche (36) gegen die Innenseite (16) und eine äußere Lasche (37) gegen die Außenseite (17) abgestützt ist.

4. Scheibenbremse nach Anspruch 2 oder 3, **dadurch gekennzeichnet, dass** die Flächen, an denen die Bleche (30) mit den ersten und zweiten Stützflächen in Kontakt stehen, symmetrisch in Bezug auf die Mitte des Belagschachts (20) in Umfangsrichtung angeordnet sind.

5. Scheibenbremse nach einem der Ansprüche 2-4, **dadurch gekennzeichnet, dass** die an dem Radialschenkel (31) ausgebildeten inneren und äußeren Laschen (36, 37) jeweils aus einem mit dem Radialschenkel (31) verbundenen Basisabschnitt (34) und einem sich von dem Basisabschnitt (34) weg erstreckenden Klemmabschnitt (35) bestehen, wobei die Abstände der Klemmabschnitte (35) der Laschen (36, 37) zueinander geringer sind, als die Abstände der Basisabschnitte (34) der Laschen zueinander.

6. Scheibenbremse nach Anspruch 5, **dadurch gekennzeichnet, dass** sich die Klemmabschnitte (35) in Längsrichtung des jeweiligen Radialschenkels (31) von den Basisabschnitten (34) weg erstrecken.

7. Scheibenbremse nach einem der Ansprüche 2-6, **dadurch gekennzeichnet, dass** der Montageindikator (45) an einem dem Tangentialschenkel (32) abgewandten Rand (44) des Radialschenkels (31) angeformt ist.

8. Scheibenbremse nach Anspruch 7, **dadurch gekennzeichnet, dass** der Montageindikator (45) über einen 180°-Bogen mit dem Rand (44) verbunden ist, und sich im Übrigen parallel zu dem Radialschenkel (31) erstreckt.

9. Scheibenbremse nach einem der vorangehenden Ansprüche, **dadurch gekennzeichnet, dass** die Struktur (47), mit der der Bremsträger (2) versehen ist, eine Ausnehmung (47) ist, in die der Montageindikator (45) durch Eintauchen eingreift.

10. Scheibenbremse nach Anspruch 9, **dadurch gekennzeichnet, dass** die Belagrückenplatte (9) an ihrer Rückseite zur Gewichtsreduzierung Streben (51) aufweist, die sich von einem strebenfreien Zentralbereich (52) bis zu einem rahmenförmigen Verstärkungsrand (55) erstrecken, und dass sich Ausnehmungen (50) in dem rahmenförmigen Verstärkungsrand (55) befinden, in den die Halteelemente (40), die an den Blechen (30) angeformte Arme sind, durch Eintauchen eingreifen.

11. Schutzblechanordnung für die Anordnung zwischen einem Bremsträger einer Scheibenbremse und einem darin in Bremszustellrichtung (R) geführten Bremsbelag, mit einem ein- oder zweiteiligen Grundkörper aus insgesamt zwei Radialschenkeln (31) und zwei Tangentialschenkeln (32), von denen die Radialschenkel (31) mit einander zugewandten und die Tangentialschenkel (32) mit zueinander fluchtenden Anlageflächen (25) für die Abstützung sowie für die Führung des Bremsbelags in Bremszustellrichtung (R) versehen sind, und sich die Radialschenkel (31) und Tangentialschenkel (32) in Bremszustellrichtung (R) jeweils von einem Innenrand (26) bis zu einem Außenrand (27) erstrecken,
mit an dem Innenrand und dem Außenrand (27) ausgebildeten Laschen (36, 37),
wobei die Lasche (36) an dem Innenrand (26) zur Abstützung gegen eine Innenseite, und die Lasche (37) an dem Außenrand (27) zur Abstützung gegen eine Außenseite des Bremsträgers ausgebildet ist, und
mit einem zum Eingriff in eine Struktur des Bremsträgers ausgebildeten Montageindikator (45), der an dem Radialschenkel (31) ausgebildet und in einer Ebene (E) zwischen dem Innenrand (26) und dem Außenrand angeordnet ist,
wobei in Bremszustellrichtung (R) der Abstand der Ebene (E) zu dem Innenrand (26) einerseits und zu dem Außenrand (27) andererseits unterschiedlich groß ist,
**gekennzeichnet durch** Halteelemente (40), die zur Fixierung der Grundkörper an dem Bremsbelag ausgebildet sind, so dass beim Einsetzen des Bremsbelags (5) mit der daran fixierten Schutzblechanordnung in den Belagschacht (20) von oben, also mit Montagerichtung parallel zu der als Reibfläche ausgebildeten Innenseite (16) der Bremsscheibe (1), die Laschen (36) zur Anlage an eine Innenseite (16), und die anderen Laschen (37) zur Anlage an einer Außenseite (17) des Bremsträgers (2) gelangen.

12. Schutzblechanordnung nach Anspruch 11, **dadurch gekennzeichnet, dass** der Montageindikator (45) an einem dem Tangentialschenkel (32) abgewandten Rand (44) des Radialschenkels (31) angeformt ist.

13. Schutzblechanordnung nach Anspruch 11 oder 12, **dadurch gekennzeichnet, dass** sich der Montageindikator (45) auf der der Anlagefläche (25) abgewandten Seite des Radialschenkels (31) befindet.

14. Schutzblechanordnung nach Anspruch 13, **dadurch gekennzeichnet, dass** der Montageindikator (45) über einen 180°- Bogen mit dem Rand (44) verbunden ist, und sich im Übrigen parallel zu dem Radialschenkel (31) erstreckt.

15. Schutzblechanordnung nach einem der Ansprüche 11-14, **dadurch gekennzeichnet, dass** die an dem Radialschenkel (31) ausgebildeten inneren und äußeren Laschen (36, 37) jeweils aus einem mit dem Radialschenkel (31) verbundenen Basisabschnitt (34) und einem sich von dem Basisabschnitt (34) weg erstreckenden Klemmabschnitt (35) bestehen, wobei die Abstände der Klemmabschnitte (35) der Laschen (36, 37) zueinander geringer sind, als die Abstände der Basisabschnitte (34) der Laschen zueinander.

16. Schutzblechanordnung nach Anspruch 15, **dadurch gekennzeichnet, dass** sich die Klemmabschnitte (35) in Längsrichtung des jeweiligen Radialschenkels (31) von den Basisabschnitten (34) weg erstrecken.

17. Schutzblechanordnung nach einem der Ansprüche 11-16,
**dadurch gekennzeichnet,**
**dass** in Bremszustellrichtung (R) die Fixierkraft der Halteelemente (40) geringer ist, als die Fixierkraft der an dem Innenrand (26) ausgebildeten Laschen (36).

18. Bremsbelag (5,6) mit einer daran fixierten Schutzblechanordnung nach einem der Ansprüche 11 bis 17.

## Claims

1. Disk brake comprising a brake carrier (2) which can be mounted on a vehicle axle and a brake caliper (3) which bridges brake linings (5, 6) arranged on the inner side and on the outer side of a brake disk (1),
wherein the brake linings (5, 6) consist of a friction lining (8) facing the brake disk (1) and a lining rear plate (9), and a pressure element guided in the brake caliper (3) can be applied against the lining rear plate (9) of the inner brake lining (5),
wherein the brake carrier (2), for receiving the inner brake lining (5), has a lining well (20) having two mutually facing first supporting surfaces for supporting the brake lining (5) in the circumferential direction and second supporting surfaces for supporting the brake lining (5) radially on the inside, and
wherein the brake carrier (2) is planar with an inner side (16) and a parallel outer side (17), at least surrounding the lining well (20),
wherein a plate (30) is arranged between the brake lining (5) and each first supporting surface, on which plate tabs (36, 37) are formed for fixing the plate in the application direction (R), of which an inner tab (36) is supported against the inner side (16) and an outer tab (37) is supported against the outer side (17),
wherein at least one of the plates (30) is provided with a mounting indicator (45) which is situated in a plane (E) between the inner side (16) and the outer side (17), wherein the spacing of the plane (E) from the inner side (16) on one side and from the outer side (17) on the other side is different in the application direction (R), and
wherein the brake carrier (2), in the same plane (E), is provided with a structure (47) in which the mounting indicator (45) engages, or which engages in the mounting indicator (45),
**characterized in that**
the brake lining (5) is inserted into the lining well (20) from above, i.e. with a mounting direction parallel to the inner side (16) of the brake disk (1), which inner side is a friction surface,
the plates (30) are fixed to the lining rear plate (9) by means of retaining elements (40), so that, when the brake lining (5) with the plates (30) fixed thereon is inserted into the lining well (20), the tabs (36) come into contact with the inner side (16) and the other tabs (37) come into contact with the outer side (17) of the brake carrier (2), and
the fixing force of the retaining elements (40) in the application direction (R) is smaller than the fixing force of the tabs (36) supported against the inner side (16).

2. Disk brake according to claim 1, **characterized in that** the plates (30) are angle plates, each of which rests with a radial limb (31) against the first supporting surface of the lining well (20), and with a tangential limb (32) against the second supporting surface of the lining well.

3. Disk brake according to claim 2, **characterized in that** further tabs (36, 37) are formed on the tangential limb (32), of which an inner tab (36) is supported against the inner side (16) and an outer tab (37) is supported against the outer side (17).

4. Disk brake according to claim 2 or claim 3, **characterized in that** the faces on which the plates (30) are in contact with the first and second supporting surfaces are arranged symmetrically with respect to the center of the lining well (20) in the circumferential direction.

5. Disk brake according to any of claims 2 to 4, **characterized in that** the inner and outer tabs (36, 37) formed on the radial limb (31) each consist of a base portion (34) connected to the radial limb (31) and a clamping portion (35) extending away from the base portion (34), wherein the spacings of the clamping portions (35) of the tabs (36, 37) from one another are smaller than the spacings of the base portions (34) of the tabs from one another.

6. Disk brake according to claim 5, **characterized in that** the clamping portions (35) extend away from the base portions (34) in the longitudinal direction of the relevant radial limb (31).

7. Disk brake according to any of claims 2 to 6, **characterized in that** the mounting indicator (45) is integrally formed on an edge (44) of the radial limb (31) facing away from the tangential limb (32).

8. Disk brake according to claim 7, **characterized in that** the mounting indicator (45) is connected to the edge (44) over a 180° arc and otherwise extends in parallel with the radial limb (31).

9. Disk brake according to any of the preceding claims, **characterized in that** the structure (47) with which the brake carrier (2) is provided is a recess (47) into which the mounting indicator (45) engages by insertion.

10. Disk brake according to claim 9, **characterized in that** the lining rear plate (9) has struts (51) on its rear face for weight reduction, which struts extend from a strut-free central region (52) to a frame-shaped reinforcing edge (55), and **in that** recesses (50) are located in the frame-shaped reinforcing edge (55), into which the retaining elements (40), which are arms integrally formed on the plates (30), engage by insertion.

11. Guard plate assembly for arrangement between a brake carrier of a disk brake and a brake lining guided therein in the brake application direction (R), comprising a one- or two-piece main body consisting of a total of two radial limbs (31) and two tangential limbs (32), of which the radial limbs (31) are provided with mutually facing contact surfaces (25) and the tangential limbs (32) are provided with mutually aligned contact surfaces for supporting and guiding the brake lining in the brake application direction (R), and the radial limbs (31) and tangential limbs (32) each extend in the brake application direction (R) from an inner edge (26) to an outer edge (27),
comprising tabs (36, 37) on the inner edge and the outer edge (27), wherein tab (36) is formed on the inner edge (26) to provide support against an inner side of the brake carrier, and tab (37) is formed on the outer edge (27) to provide support against an outer side of the brake carrier, and
comprising a mounting indicator (45) designed to engage in a structure of the brake carrier, which mounting indicator is formed on the radial limb (31) and is arranged in a plane (E) between the inner edge (26) and the outer edge, wherein the spacing of the plane (E) from the inner edge (26) on one side and from the outer edge (27) on the other side is different in the brake application direction (R),
**characterized by** retaining elements (40) which are designed for fixing the main bodies to the brake lining, so that, when the brake lining (5) with the guard plate assembly fixed thereon is inserted into the lining well (20) from above, i.e. with a mounting direction parallel to the inner side (16) of the brake disk (1), which inner side is formed as a friction surface, the tabs (36) come into contact with an inner side (16) and the other tabs (37) come into contact with an outer side (17) of the brake carrier (2).

12. Guard plate assembly according to claim 11, **characterized in that** the mounting indicator (45) is integrally formed on an edge (44) of the radial limb (31) facing away from the tangential limb (32).

13. Guard plate assembly according to claim 11 or claim 12, **characterized in that** the mounting indicator (45) is situated on the side of the radial limb (31) facing away from the contact surface (25).

14. Guard plate assembly according to claim 13, **characterized in that** the mounting indicator (45) is connected to the edge (44) over a 180° arc and otherwise extends in parallel with the radial limb (31).

15. Guard plate assembly according to any of claims 11 to 14, **characterized in that** the inner and outer tabs (36, 37) formed on the radial limb (31) each consist of a base portion (34) connected to the radial limb (31) and a clamping portion (35) extending away from the base portion (34), wherein the spacings of the clamping portions (35) of the tabs (36, 37) from one another are smaller than the spacings of the base portions (34) of the tabs from one another.

16. Guard plate assembly according to claim 15, **characterized in that** the clamping portions (35) extend away from the base portions (34) in the longitudinal direction of the relevant radial limb (31).

17. Guard plate assembly according to any of claims 11 to 16, **characterized in that** the fixing force of the retaining elements (40) in the brake application direction (R) is smaller than the fixing force of the tabs (36) formed on the inner edge (26).

18. Brake lining (5,6) comprising a guard plate assembly fixed thereon according to any of claims 11 to 17.

## Revendications

1. Frein à disque comportant un support de frein (2) pouvant être monté sur un essieu de véhicule et un étrier de frein (3) qui recouvre des garnitures de frein (5, 6) disposées sur le côté intérieur ou le côté extérieur d'un disque de frein (1),
dans lequel les garnitures de frein (5, 6) se composent d'une garniture de friction (8) tournée vers le disque de frein (1) et d'une plaque arrière de garniture (9), et un organe de pression guidé dans l'étrier de frein (3) peut être avancé contre la plaque arrière de garniture (9) de la garniture de frein (5) intérieure,
dans lequel le support de frein (2) présente, pour la réception de la garniture de frein (5) intérieure, une cavité pour garniture (20) comportant deux premières surfaces de soutien tournées l'une vers l'autre pour le soutien de la garniture de frein (5) dans la direction périphérique et des secondes surfaces de soutien pour le soutien de la garniture de frein (5) radialement vers l'intérieur, et
dans lequel le support de frein (2) est réalisé à plat au moins autour de la cavité pour garniture (20) avec un côté intérieur (16) et un côté extérieur (17) parallèle,
dans lequel est disposée, entre la garniture de frein (5) et chaque première surface de soutien, respectivement une tôle (30) sur laquelle sont réalisées, pour sa fixation dans la direction d'avance (R), des pattes (36, 37) parmi lesquelles une patte intérieure (36) est soutenue contre le côté intérieur (16) et une patte extérieure (37) est soutenue contre le côté extérieur (17),
dans lequel au moins l'une des tôles (30) est pourvue d'un indicateur de montage (45) qui se situe dans un plan (E) entre la face intérieure (16) et la face extérieure (17), dans lequel, dans la direction d'avance (R), la distance du plan (E) par rapport au côté intérieur (16) d'une part et par rapport au côté extérieur (17) d'autre part est différente, et
dans lequel le support de frein (2) est pourvu, dans le même plan (E), d'une structure (47) dans laquelle l'indicateur de montage (45) vient en prise ou qui vient en prise dans l'indicateur de montage (45),
**caractérisé en ce**
**que** l'insertion de la garniture de frein (5) dans la cavité pour garniture (20) est effectuée par le haut, c'est-à-dire avec une direction de montage parallèle au côté intérieur (16), réalisé en tant que surface de friction, du disque de frein (1),
**que** les tôles (30) sont fixées sur la plaque arrière de garniture (9) au moyen d'éléments de retenue (40), de sorte que, lors de l'insertion de la garniture de frein (5) avec les tôles (30) fixées sur celle-ci dans la cavité pour garniture (20), les pattes (36) viennent en appui contre le côté intérieur (16), et les autres pattes (37) viennent en appui contre le côté extérieur (17) du support de frein (2), et
**que**, dans la direction d'avance (R), la force de fixation des éléments de retenue (40) est inférieure à la force de fixation des pattes (36) soutenues contre le côté intérieur (16).

2. Frein à disque selon la revendication 1, **caractérisé en ce que** les tôles (30) sont des tôles angulaires qui s'appuient respectivement par une branche radiale (31) sur la première surface de soutien, et par une branche tangentielle (32) sur la seconde surface de soutien de la cavité pour garniture (20).

3. Frein à disque selon la revendication 2, **caractérisé en ce que** d'autres pattes (36, 37) sont réalisées sur la branche tangentielle (32), parmi lesquelles une patte intérieure (36) est soutenue contre le côté intérieur (16) et une patte extérieure (37) est soutenue contre le côté extérieur (17).

4. Frein à disque selon la revendication 2 ou 3, **caractérisé en ce que** les surfaces sur lesquelles les tôles (30) sont en contact avec les premières et secondes surfaces de soutien sont disposées symétriquement par rapport au centre de la cavité pour garniture (20) dans la direction circonférentielle.

5. Frein à disque selon l'une des revendications 2 à 4, **caractérisé en ce que** les pattes (36, 37) intérieure et extérieure réalisées sur la branche radiale (31) sont respectivement constituées d'une section de base (34) reliée à la branche radiale (31) et d'une section de serrage (35) s'étendant en s'éloignant de la section de base (34), dans lequel les distances entre les sections de serrage (35) des pattes (36, 37) entre elles sont inférieures aux distances entre les sections de base (34) des pattes entre elles.

6. Frein à disque selon la revendication 5, **caractérisé en ce que** les sections de serrage (35) s'étendent dans la direction longitudinale de la branche radiale (31) respective en s'éloignant des sections de base (34).

7. Frein à disque selon l'une des revendications 2 à 6, **caractérisé en ce que** l'indicateur de montage (45) est formé sur un bord (44) de la branche radiale (31) qui est opposé à la branche tangentielle (32).

8. Frein à disque selon la revendication 7, **caractérisé en ce que** l'indicateur de montage (45) est relié au bord (44) par l'intermédiaire d'un arc de 180°, et s'étend par ailleurs parallèlement à la branche radiale (31).

9. Frein à disque selon l'une des revendications précédentes, **caractérisé en ce que** la structure (47) dont est pourvu le support de frein (2) est un évidement (47) dans lequel l'indicateur de montage (45) vient en prise par enfoncement.

10. Frein à disque selon la revendication 9, **caractérisé en ce que** la plaque arrière de garniture (9) présente sur son côté arrière, pour la réduction du poids, des entretoises (51) qui s'étendent depuis une zone centrale (52) dépourvue d'entretoises jusqu'à un bord de renforcement (55) en forme de cadre, et **en ce que** des évidements (50) se situent dans le bord de renforcement (55) en forme de cadre, dans lesquels les éléments de retenue (40), lesquels sont des bras formés sur les tôles (30), viennent en prise par enfoncement.

11. Agencement de tôles de protection pour la disposition entre un support de frein d'un frein à disque et une garniture de frein guidée dans celui-ci dans la direction d'avance de frein (R), comportant un corps de base en une ou deux parties constitué au total de deux branches radiales (31) et de deux branches tangentielles (32), parmi lesquelles les branches radiales (31) sont pourvues de surfaces d'appui tournées l'une vers l'autre et les branches tangentielles (32) sont pourvues de surfaces d'appui (25) en affleurement l'une avec l'autre pour le soutien ainsi que pour le guidage de la garniture de frein dans la direction d'avance de frein (R), et les branches radiales (31) et les branches tangentielles (32) s'étendent dans la direction d'avance de frein (R) respectivement d'un bord intérieur (26) jusqu'à un bord extérieur (27),
comportant des pattes (36, 37) réalisées sur le bord intérieur et le bord extérieur (27), dans lequel la patte (36) est réalisée sur le bord intérieur (26) pour le soutien contre un côté intérieur, et la patte (37) est réalisée sur le bord extérieur (27) pour le soutien contre un côté extérieur du support de frein, et
comportant un indicateur de montage (45) réalisé pour la mise en prise dans une structure du support de frein, lequel indicateur de montage est réalisé sur la branche radiale (31) et est disposé dans un plan (E) entre le bord intérieur (26) et le bord extérieur, dans lequel, dans la direction d'avance de frein (R), la distance du plan (E) par rapport au bord intérieur (26) d'une part et par rapport au bord extérieur (27) d'autre part est différente,
**caractérisé par** des éléments de retenue (40) qui sont réalisés pour la fixation des corps de base sur la garniture de frein, de sorte que, lors de l'insertion par le haut de la garniture de frein (5) avec l'agencement de tôles de protection fixé sur celle-ci dans la cavité pour garniture (20), donc avec une direction de montage parallèle au côté intérieur (16), réalisé en tant que surface de friction, du disque de frein (1), les pattes (36) arrivent en appui contre un côté intérieur (16), et les autres pattes (37) arrivent en appui contre un côté extérieur (17) du support de frein (2).

12. Agencement de tôles de protection selon la revendication 11, **caractérisé en ce que** l'indicateur de montage (45) est formé sur un bord (44) de la branche radiale (31) qui est opposé à la branche tangentielle (32).

13. Agencement de tôles de protection selon la revendication 11 ou 12, **caractérisé en ce que** l'indicateur de montage (45) se situe sur le côté de la branche radiale (31) opposé à la surface d'appui (25).

14. Agencement de tôles de protection selon la revendication 13, **caractérisé en ce que** l'indicateur de montage (45) est relié au bord (44) par l'intermédiaire d'un arc de 180°, et s'étend par ailleurs parallèlement à la branche radiale (31).

15. Agencement de tôles de protection selon l'une des revendications 11 à 14, **caractérisé en ce que** les pattes intérieure et extérieure (36, 37) réalisées sur la branche radiale (31) sont respectivement constituées d'une section de base (34) reliée à la branche radiale (31) et d'une section de serrage (35) s'étendant en s'éloignant de la section de base (34), dans lequel les distances des sections de serrage (35) des pattes (36, 37) entre elles sont inférieures aux distances des sections de base (34) des pattes entre elles.

16. Agencement de tôles de protection selon la revendication 15, **caractérisé en ce que** les sections de serrage (35) s'étendent dans la direction longitudinale de la branche radiale (31) respective en s'éloignant des sections de base (34).

17. Agencement de tôles de protection selon l'une des revendications 11 à 16, **caractérisé en ce que**, dans la direction d'avance de frein (R), la force de fixation des éléments de retenue (40) est inférieure à la force de fixation des pattes (36) réalisées sur le bord intérieur (26).

18. Garniture de frein (5, 6) comportant un agencement de tôles de protection fixé sur celle-ci selon l'une des revendications 11 à 17.
